# EUROPÄISCHE PATENTSCHRIFT

(11) **EP 0 494 897 B1**
(45) Veröffentlichungstag und Bekanntmachung des Hinweises auf die Patenterteilung: **01.09.1993**
(21) Anmeldenummer: 90914384.4
(22) Anmeldetag: 02.10.1990
(51) Int. Cl.: B64D 17/72, B64D 17/14

(54) **FALL- ODER GLEITSCHIRM**
PARACHUTE
PARACHUTE DE DESCENTE OU ASCENSIONNEL

(30) Priorität: 04.10.1989 DE 3933126
(43) Veröffentlichungstag der Anmeldung: 22.07.1992
(73) Patentinhaber: KREBBER, Burghardt, D-86899 Landsberg (DE)
(72) Erfinder: KREBBER, Burghardt, D-86899 Landsberg (DE)
(74) Vertreter: Merten, Fritz
(86) Internationale Anmeldenummer: DE9000748
(87) Internationale Veröffentlichungsnummer: WO9104909

(56) Entgegenhaltungen:
- DE-A- 3 708 926
- FR-A- 2 347 944
- GB-A- 1 018 883
- GB-A- 1 050 971

## Beschreibung

Die meisten schweren Unfälle mit einem Fall-, oder Gleitschirm erfolgen beim Absrung aus niedrigen Höhen oder bei Flugzuständen, die sehr kurze Öffnungszeiten des Fallschirmes erforderlich machen. Dies bedeutet, daß z. B. aus niedrigen Höhen von ca. 20 - 30 m kaum eine Chance besteht, daß ein üblicher Fallschirm rechtzeitig aufgeht, so daß tödliche Unfälle nicht vermieden werden können.

Es sind bereits Fallschirme mit Vorrichtungen zum schnellen Öffnen des Fallschirmes bekannt, die den Schirm mittels einer Rakete aus seiner Verpackung ziehen und dessen Schirmkappe und Leinen in sehr kurzer Zeit strecken. Nachteilig ist jedoch, daß sich die Kappe dann nur langsam füllt, abhängig von der relativen Geschwindigkeit zwrischen Schirm und Luft. Ein weiterer Nachteil ist die Gefährlichkeit der Rakete.

Weiter ist bekannt, daß beim Auslösen eines Haupt-Fallschirmes zunächst mit. einer Feder ein kleiner Hilfsfallschirm aus der Verpackung geschleudert und entfaltet wird. Durch den aerodynamischen Widerstand des Hilfsfallschirmes wird das Herausziehen der Schirmkappe und der Leinen aus der Verpackung beschleunigt. Nachteilig macht sich hierbei aber bemerkbar, daß die Größe des Hilfsschirmes beschränkt ist. Ferner ist die Ausziehkraft von der relativen Geschwindigkeit zwischen Schirm und Luft abhängig, dies trifft auch für das Füllen der Kappe zu.

Ferner sind Fallschirme bekannt, deren Schirmkappen und Leinen, wie schon beschrieben, mit Rakete oder Hilfsfallschirm aus der Verpackung gezogen und gestreckt werden, wobei man den eigentlichen Öffnungs- und Füllvorgang dadurch beschleunigt, daß man die Leinen durch einen Ring zieht, der direkt unterhalb des Kappenbeginns angeordnet ist. Der Ring enthält eine Sprengladung, die ausgelöst wird, wenn Leinen und Kappe gestreckt sind. Durch die Sprengung wird die Masse des Ringes für jede Leine in je eine kleine Masse geteilt und die Massen mit Leinen auseinandergeschleudert, wodurch sich die Kappe im Luftstrom schnell füllen kann. Nachteilig ist hierbei die Gefährlichkeit der Vorrichtung und der hohe Aufwand.

Auch sind Lösungen für ein schnelleres Herausziehen eines Fallschirmes aus der Verpackung bekannt, die ein Schwunggewicht, das beschleunigt wird, benutzen. Das Schwunggewicht kann mit Hilfe einer Feder, einer Pulverladung oder Preßluft bechleunigt werden. Das Gewicht ist meist am Scheitel der Fallschirmkappe befestigt. Auch hier ist es von Nachteil, daß das Füllen der Kappe nicht beschleunigt wird. Die Gewichte stellen eine große Gefahr für Personen und Sachen dar.

Ferner sind z. B. aus der US-PS 1,678,537 Vorrichtungen zum schnellen Öffnen von Fallschirmen bekannt, bei denen vom Scheitel des Schirmes ausgehend, strahlenförmig Schläuche angeordnet sind, die mit dem Fallschirmtuch gerafft sind. Beim Auslösen des Fallschirmes wird Druckgas aus einem Druckbehälter über ein Ventil in die Schläuche gedrückt, die sich dann strecken. Nachteilig hierbei ist, daß der Füllvorgang verhältnismäßig lange dauert und eine Rettung bei Absprung aus niedrigen Höhen und bei kritischen Flugzuständen unmöglich ist.

Aus der DE-A-3 708 926 ist ebenfalls ein Fallschirm bekannt, der einen aufblasbaren Schlauch besitzt, der im Randbereich der Kappe angeordnet ist. Der Schlauch kann eine Wulst oder eine Schnur aufweisen, wodurch eine bessere Luftdurchgängigkeit erreicht wird. Nachteilig ist auch hier, daß der Schlauch erst beim Absprung mit Luft gefüllt wird. Darüber hinaus ist nicht erkennbar, wie eine zuverlässige Funktion gesichert ist.

Ein Fallschirm mit einem aufbaubedingten Ventilsystem zwischen zwei Ebenen ist aus der GB-A-1 018 883 bekannt. Hier ist jedoch nicht gesichert, daß sich der äußere Rand hinreichend schnell zwangsläufig öffnet.

Aus der DE-A-1 756 728 ist auch eine Vorrichtung, bei der ein ringförmiger Schlauch an der Peripherie des Schirmes durch Schnürung angebracht ist, bekannt. Auch hier ist der Schirm gerafft in der Verpackung untergebracht. Beim Auslösen des Schirmes mittels eines Hilfsfallschirms wird der Schlauch über ein Ventil von einer Druckflasche gefüllt. Der Nachteil dieser Vorrichtung liegt darin, daß die Leinen und Kappe normalerweise in einer verhältnismäßig langen Zeit aus der Verpackung gezogen und gestreckt werden, wobei noch erhebliche Zeit für den Füllvorgang erforderlich ist.

Bei Rettungsvorgängen aus oder mit niedrig fliegenden Fluggeräten oder Sprüngen aus niedrigen Höhen mit Fallschirmen ist selten eine wirkliche Rettungschance gegeben. Besonders in kritischen Phasen des Fluges, z. B. bei Start und Landung, macht sich das hohe Risiko bekannter Fallschirme nachteilig bemerkbar.

Bei herkömmlichen Fallschirmen wird meist zunächst die Kappe und dann die Leinen mit einem Hilfsschirm aus der Verpackung gezogen. Sowohl die herausgezogene Schirmkappe als auch die Tragleinen sind bis zur Entfaltung des Schirmes kurzzeitig dem Luftstrom unkontrolliert ausgesetzt, wodurch der Schirm in das Fluggerät treiben kann und sich möglicherweise mit diesem verfängt.

Man hat versucht, die genannten Nachteile dadurch zu überwinden, daß man einen Fallschirm mit einem, am Saum der Kappe des Schirms angebrachten, ringförmigen Schlauch versehen hat, der bereits im verpackten Zustand mit Druckluft gefüllt ist. Die EP-OS 0 263 134 offenbart einen solchen Fallschirm. Der ringförmige Schlauch ist hier in dem Packsack mäanderförmig zusammengelegt und an mehreren Stellen geknickt. Es hat sich gezeigt, daß die Befüllung dieses Schlauchs mit Druckluft eine hohe Fehlerquote aufweist, da die Luft nicht immer und nicht zuverlässig über die Knickstellen strömt. Unvollständig gefüllte Schläuche wirken jedoch nicht ausreichend als Öffnungshilfe und verursachen möglicherweise schwere Unfälle.

Aufgabe der Erfindung ist es daher, einen Fall-, oder Gleitschirm mit einer schlauchförmigen Öffnungshilfe zu schaffen, die vor dem Öffnungsvorgang mit unter Druck stehender Luft oder Gas gefüllt ist, die den Fall,- oder Gleitschirm leicht und zuverlässig ohne Verzögerung öffnet und die gleichzeitig derart gestaltet ist, daß bei der Bereitstellung des Fall-, oder Gleitschirms eine sichere und einfache Befüllung gewährleistet ist.

Diese Aufgabe wird mit dem kennzeichnenden Merkmal des Hauptanspruchs gelöst.

Weitere vorteilhafte Ausführungen sind in den Unteransprüchen enthalten.

So hat sich gezeigt, daß bei einem Fall-, oder Gleitschirm, der mit einer schlauchförmigen Öffnungshilfe ausgestattet ist, die sich am unteren Saum der Kappe befindet, sich gegenüber üblichen Fallschirmen neue Probleme dadurch ergeben, daß das Flugverhalten durch die schlauchförmige Öffnungshilfe beeinträchtigt werden kann, da durch diese der Saum in einer anderen Weise stabilisiert wird. Ein solcher Fall-, oder Gleitschirm kann nicht in der gleichen Weise Pumpbewegungen der Kappe durchführen, wie ein üblicher Fallschirm. Er neigt zum Torkeln oder Schwingen. Besonders bei ungeübten Springern kann dies zur Folge haben, daß diese bei der Landung in Rückenlage geraten und sich schwere, möglicherweise auch tödliche Verletzungen zufügen. Überraschend hat sich gezeigt, daß das Flugverhalten dadurch stabilisiert werden kann, daß die Kappe des Fall-, oder Gleitschirms stirnseitig mit einem oder mehreren Luftfenstern versehen wird. Als besonders vorteilhaft haben sich L-förmige Luftfenster erwiesen, die sich in einem Abstand vom unteren Saum befinden und deren Querbalken nach außen weisen. Um wiederum die Luftfenster und den Schirm insgesamt zu stabilisieren, hat es sich als vorteilhaft erwiesen, die Fenster mit einem Netz, z. B. einem grobmaschigen Gaze-Netz zu unterlegen.

Neben dieser Maßnahme wirken auch, von üblichen Fallschirmen an und für sich bekannte, Elemente stabilisierend auf das Flugverhalten eines erfindungsgemäßen Schirms, wie z. B. das Anbringen einer zentralen Halteleine, mittels derer der obere Teil der Kappe ein Stück weit eingezogen werden kann, als auch die Verlängerung einiger rückwärtiger Fangleinen, wodurch sich der Fall-, oder Gleitschirm dort etwas nach oben ausbuchten kann.

Überraschenderweise hat sich ebenfalls gezeigt, daß es nicht nötig ist, die schlauchförmige Öffnungshilfe so zu gestalten, daß sie entlang des gesamten Saums der Kappe verläuft. Ein sicheres Öffnen wird auch dadurch gewährleistet, daß mehrere Teilstücke in einem Abstand voneinander im Saum angebracht sind. Diese Teilstücke können miteinander verbunden sein, etwa indem sich die Druckluft gefüllten oder verschweißten Teilstücke des selben Schlauchs abwechseln. Durch diese Maßnahme ist es möglich, das Volumen und zum Teil auch das Gewicht des verpackten Schirms zu vermindern. Auch das Verpacken wird erleichtert.

Die schlauchförmige Öffnungshilfe wird vorteilhafterweise aus einem Material hergestellt, das luftdicht, reißfest, temperaturbeständig und formstabil ist. Die schlauchförmige Öffnungshilfe muß Temperaturschwankungen von -50° C bis +120° C ohne Verlust der Funktionsfähigkeit überstehen können. Sie muß soviel Formstabilität und Eigenelastizität aufweisen, daß sie aus dem zusammengelegten und geknickten Zustand sicher aufspringt. Sie sollte auch beständig gegenüber Öl oder Ozon sein. Gleichzeitig muß sie hohen Drücken von über 10 000 hPa (10 bar) standhalten können. Es hat sich gezeigt, daß bestimmte thermoplastische Elastomere diese Anforderungen erfüllen. Als besonders geeignet hat sich das Produkt Alcryn der Firma DuPont erwiesen.

Zur Befüllung der schlauchförmigen Öffnungshilfe werden ein oder mehrere Ventile vorgesehen. Es hat sich als vorteilhaft erwiesen, diese an Stellen anzubringen, die, bei in den Saum eingelegter Öffnungshilfe, leicht von außen zugänglich sind, beispielsweise dadurch, daß Enden der Öffnungshilfe nach außen ragen. Um die Befüllung zu überprüfen sollen an den Ventilen gegenüberliegenden Enden Meßgeräte, z. B. Manometer angebracht werden, die ebenfalls von außen ablesbar sein sollten. So kann sicher festgestellt werden, daß sich die eingefüllte Druckluft in der gesamten schlauchförmigen Öffnungshilfe verteilt hat. Mittels Ventile und Manometer können die Fall-, oder Gleitschirme auf die gegebenen Bedingungen eingestellt werden. So ist es wichtig, die Geschwindigkeit des Flugzeugs zu berücksichtigen, aus dem abgesprungen werden soll. Bei geringer Geschwindigkeit ist es vorteilhaft, die schlauchförmige Öffnungshilfe mit hohen Drücken, etwa über 3 bar zu beaufschlagen, während bei höheren Geschwindigkeiten niedrigere Drücke, vorzugsweise unter 4 bar eingestellt werden sollten, da der Öffnungsruck andernfalls so stark würde, daß die abspringende Person bewußtlos würde. Die schlauchförmige Öffnungshilfe kann so auch von vorneherein auf hohe Drücke eingestellt sein, die auf den Manometern ablesbar sind, und es kann, je nach Bedarf, über die Ventile Druck abgelassen werden.

Zur Verringerung des Öffnungsdrucks können auch Öffnungsbegrenzungen für die Fangleinen vorgesehen sein, die das volle Öffnen des Fall-, oder Gleitschirms verzögern.

Übliche Fallschirme müssen beim Verpacken in die zugehörigen Packsäcke sehr sorgfältig zusammengelegt werden, damit die Kappe richtig herausgezogen wird, sich wunschgemäß öffnet und die Fangleinen sich nicht verheddern. Bei dem erfindungsgemäßen Fall-, oder Gleitschirm hat es sich überraschend gezeigt, daß durch die sichere und federnde Öffnung mittels der schlauchförmigen Öffnungshilfe eine einfachere Verpackungsweise, eine sogenannte Stopfpackung möglich ist. Dabei werden zuerst Kappe und dann Leinen in einen Packsack gestopft. Obwohl hier selbstverständlich auch Sorgfalt walten muß, entfallen gegenüber der üblichen Verpackungsweise etliche Handgriffe.

Die schlauchförmige Öffnungshilfe wird vorteilhafterweise auch nicht direkt in den Saum der Kappe eingelegt oder an dieser durch Einnähen, Annähen, Ankleben oder Verschweißen befestigt, sondern in ein Armierungsgewebe aus reißfesten Kunstfasern gehüllt. Dadurch werden mögliche Beschädigungen vermieden. Das Armierungsgewebe kann die schlauchförmige Öffnungshilfe umhüllen und in einer Fahne überlappen, die mit dem Saum oder der Kappe verbunden wird.

Eine Ausführungsform der Erfindung wird im Folgenden anhand einiger Zeichnungen näher beschrieben. Es handelt sich hierbei selbstverständlich nicht um die einzige Ausführungsform. So ist es ohne weiteres möglich, auch Matratzenschirme und ähnliche Gleitschirme mit erfindungsgemäßen schlauchförmigen Öffnungshilfen auszustatten, wobei als Saum hier die nach unten gerichteten Nähte zwischen den einzelnen Bahnen oder Kammern zu verstehen sind.

Im Einzelnen zeigen:
- Fig. 1:: eine Außenansicht eines erfindungsgemäßen Fallschirms;
- Fig. 2:: eine Außenansicht einer weiteren Ausführung eines erfindungsgemäßen Fallschirms;
- Fig. 3:: eine Sicht von unten in den Fallschirm gemäß Fig. 2;
- Fig. 4:: eine schematische Darstellung einer Öffnungshilfe aus Teilstücken;
- Fig. 5:: eine schematische Darstellung einer weiteren Ausführungsform einer Öffnungshilfe aus Teilstücken;
- Fig. 6:: eine Draufsicht auf einen Packsack mit eingelegtem Schirm und aufgelegten Fangleinen;
- Fig. 7:: die Draufsicht gemäß Fig. 6 mit seitlich herunterhängenden Fangleinen;
- Fig. 8:: eine schlauchförmige Öffnungshilfe im ausgestreckten Zustand;
- Fig. 9:: eine Ansicht auf ein Öffnungsbegrenzung für die Fangleinen;
- Fig. 10:: eine vergrößerte Ansicht der Öffnungsbegrenzung gemäß Fig. 9;
- Fig. 11:: einen Schnitt durch eine schlauchförmige Öffnungshilfe;
- Fig. 12:: einen Schnitt durch eine schlauchförmige Öffnungshilfe;
- Fig 13:: einen Schnitt durch eine schlauchförmige Öffnungshilfe.

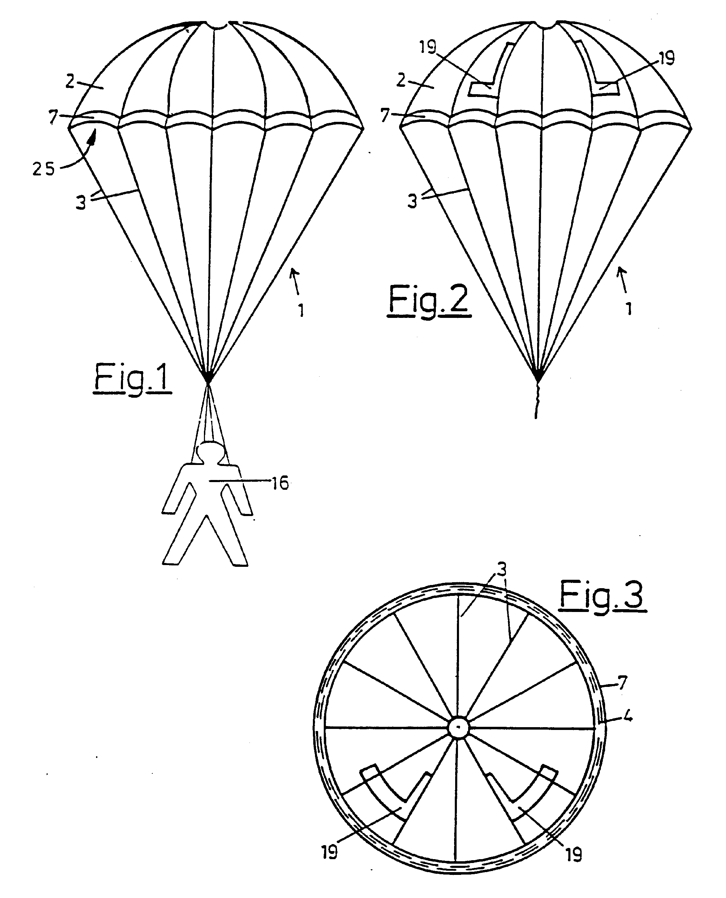

Fig. 1 zeigt einen erfindungsgemäßen Kappenfallschirm, der im wesentlichen von einer Kappe 2, den Fangleinen 3 und einer schlauchförmigen Öffnungshilfe 4 zum schnellen Aufspannen der Kappe 2, gebildet wird.

Während die Kappe 2 und die Fangleinen 3 weitgehend herkömmlichen Ausführungen nach Größe und Materialbeschaffenheit entsprechen, ist die Kappe 2 im Bereich deren Basis mit einer schlauchförmigen Öffnungshilfe 4 zum schnellen Aufspannen der Kappe 2 versehen, und diese schlauchförmige Öffnungshilfe umgreift mindestens den überwiegenden Teil des Umfanges der Kappe an deren Basis 7.

Die schlauchförmige Öffnungshilfe 4 selbst kann entweder als ein schlauchförmiger Saum 25 an der Schirmkappe 2 ausgeführt sein oder sie kann als ein durch diesen Saum durchzusteckender, besonderer Schlauch 8 ausgeführt sein.

In Fällen, wo der Saum 25 selbst die schlauchförmige Öffnungshilfe 4 bildet, ist dieser aus einem armierten, reißfesten Gewebe gefertigt, welches nach außen die Gewebestruktur allein und nach innen mit einer besonderen Beschichtung beaufschlagt ist, die die schlauchförmige Öffnungshilfe luftdicht nach außen abschließt. Diese schlauchförmige Öffnungshilfe 4 kann dabei nur einen Teil des Umfanges der Basis 7 erfassen, oder er kann um den ganzen Umfang geführt sein und in diesem Fall einen nicht ganz geschlossenen Ring bilden. Die freien Enden 9, 10 der schlauchförmigen Öffnungshilfe 4 bzw. Saumes 25 sind entweder zugeschweißt oder mittels fester Stopfen luftdicht verschlossen. Die auf diese Weise erstellte schlauchförmige Öffnungshilfe 4 ist mit mindestens einem Ventil 11 versehen, und sie ist im betriebsbereiten Zustand des Fallschirms mit einer unter hohem Druck, z. B 2000-15000 hPa (2 - 15) bar, stehenden Luft aufgeblasen. Der Saum 25 selbst ist mit der Kappe 2 fest verbunden oder einstückig ausgeführt.

Um ein unkontrolliertes Aufspringen der mit Luft gefüllten schlauchförmigen Öffnungshilfe 4, z. B. des Schlauches, beim Entfalten der Kappe 2 zu vermeiden, empfiehlt es sich, die freien Enden 9, 10 der schlauchförmigen Öffnungshilfe mit einem Seil zu verbinden.

Der auf diese Weise mit der Kappe 2 verbundene Saum 25, der, wie bereits ausgeführt, unter dem Druck der Luft steht, hat das Bestreben, sich zu strecken, so daß er beim Benutzen des Fallschirmes die Kappe 2 aufspannt, wodurch sofort Luft in diese gelangt und sie aufbläht. Die schlauchförmige Öffnungshilfe 4 bzw. der Saum 25 sorgt also dafür, daß nach sehr kurzer Fallzeit die Kappe 2 aufgespannt wird, um die Fallgeschwindigkeit zu bremsen.

Analog der als Saum 25 ausgeführten schlauchförmigen Öffnungshilfe 4 verhält sich die als besonderer Schlauch 8 ausgeführte schlauchförmige Öffnungshilfe. Dieser Schlauch 8 kann entweder durch einen schlauchförmigen Saum 25 oder durch eine Reihe von Ösen, gezogen werden, um diesen an dem Saum 25 der Schirmkappe 2 zu befestigen.

Der Schlauch 8 selbst, der reißfest ausgeführt ist mit einer unter hohem Druck stehenden Luft gefüllt, so daß er bei Inbetriebnahme des Fallschirmes schlagartig aufspringt, d. h. sich zu strecken versucht, und dabei die Kappe 2 öffnet, die dann entsprechend deren Luftfüllung die Fallgeschwindigkeit zu bremsen beginnt.

Auch der Schlauch 8 kann ringförmig am Umfang der Bassis 7 der Kappe 2 vorgesehen sein, oder er kann nur einen Teil dieses Umfanges erfassen. Die freien Enden 9, 10 des Schlauches 8 sind, luftdicht verschlossen und mittels eines Seiles 18 miteinander verbunden oder am Umfang der Schirmkappe 2 befestigt. Ein Druckluftventil 11 am Schlauch 8 ermöglicht, wie auch beim luftdichten Saum, das Füllen des Schlauches mit Luft.

Fig. 2 und 3 zeigen eine Ausführungsform eines erfindungsgemäßen Fallschirms, bei dem zur Verbesserung der Flugeigenschaften L-förmige Luftfenster 19 stirnseitig in die Kappe 2 eingesetzt sind.

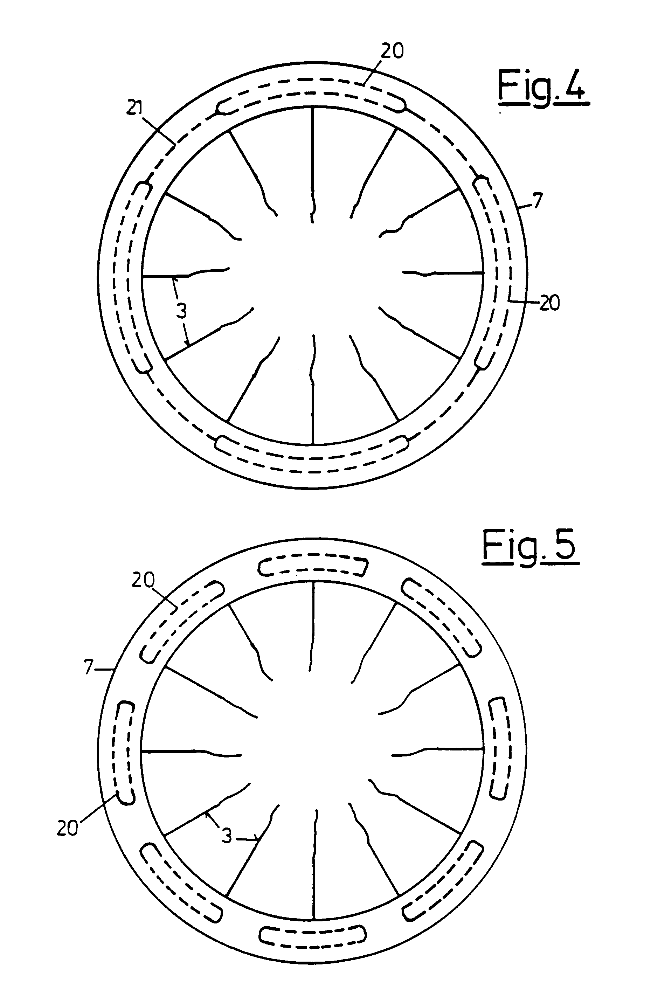

Fig. 4 und 5 stellen schematisch dar, wie eine aus Teilstücken 20 bestehende schlauchförmige Öffnungshilfe 4 entweder mit Verbindungen 21 oder ohne Verbindungen in den Saum 25 an der Basis 7 einer Kappe 2 eingelegt ist. Diese Teilstücke 20 müssen im Verpackungszustand nur wenige Male, im Extremfall nur einmal, geknickt werden.

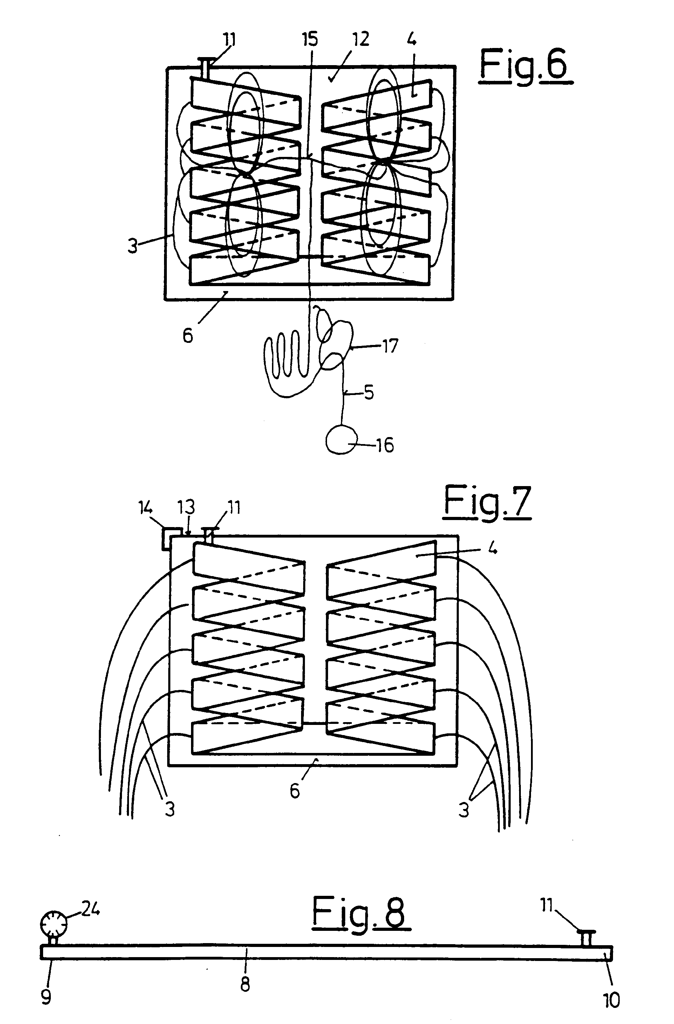

Beim Verpacken wird wie in Fig. 6 und 7 gezeigt, die Schirmkappe 2 am besten so gelegt, daß je eine Hälfte der Fangleinen 3 außen liegt und die schlauchförmige Öffnungshilfe 4, z. B. der Schlauch 8 oder Saum 25, mäanderförmig gelegt ist. Die schlauchförmige Öffnungshilfe 4, z. B. der Schlauch 8 oder der Saum wird nicht übereinander, sondern flach nebeneinander gelegt.

Erfindungsgemäß kann der Packsack 6 aus einer flachen Platte 12, die vorzugsweise aus federndem Material, wie z. B. glasfaserverstärktem Kunststoff, besteht, ausgeführt sein. An einer Kante 13 wird zur Versteifung ein Winkel 14 rechts und/oder links angebracht. Der Saum bzw. die schlauchförmige Öffnungshilfe 4 wird in immer kleiner werdenden Achtern auf den Boden der Verpackung gelegt. Ein Gurt 15, der die Enden der Fangleinen 3 zusammenfaßt und an dem das zu rettende Objekt 16 befestigt ist, wird zu einer Seite gelegt.

Der flach nebeneinanderliegende, mäanderförmig gelegte Schlauch 8 wird so über die Leinen 3 auf den Boden des Packsacks 6 gelegt, daß er diesen ausfüllt. Das Ventil 11 wird so gelegt, daß es an einer Kante 13 liegt. Darüber wird daß Tuch der Kappe 2 gerafft gelegt, wobei die Korrektheit des Verlegens eine untergeordnete Rolle spielt.

Zum Schließen der Verpackung 6 wird die Platte 12 zu einer Rolle geformt, die in sich den Fallschirm schließt, wobei der Versteifungswinkel 14 nach außen zeigt. Um die Mitte der Verpackungsrolle wird der Gurt 15 gelegt, der mit einem sich leicht und schnell öffnenden Schloß zugehalten wird. Die Verpackung 6 ist aus federndem Material gefertigt, so daß beim Öffnen des Schlosses die Verpackung schlagartig aufspringt und den Fallschirm freilegt. Aus der Verpackung 6 ragen zwei Schlaufen 17 oder Bolzen heraus, mit denen man die Verpackung am Objekt 16, wie Fallschirmspringer, Hängegleiter oder Ultraleichtflugzeug, befestigen kann.

Bei Fallschirmspringern wird die Rolle normalerweise auf dem Rücken parallel zum Körper befestigt, bei Hängegleitern und Ultraleichtflugzeugen in Flugrichtung, z. B. auf dem Kiel. Damit der aerodynamische Widerstand möglichst gering ist, kann in Flugrichtung gesehen, vorne die Öffnung des Packsacks 6 mit einer Halbkugel und die Rolle hinten mit einem Zylinder abgeschlossen werden.

Nachdem der Packsack 6 geschlossen ist, wird über das Ventil 11 Luft mit hohem Druck (2 oder mehr bar) in die schlauchförmige Öffnungshilfe 4, z. B. Saum 25 oder Schlauch 8 gefüllt. Die schlauchförmige Öffnungshilfe 4 dehnt sich aus und füllt das ganze Paket. Der Packsack 6 gerät zusätzlich unter sehr starke Spannung. Nach dem Füllen der schlauchförmigen Öffnungshilfe 4 bzw. Schlauches 8 hat dieser die Tendenz, sich zu strecken Auch durch die mäanderförmige Verlegungsart drückt der Schlauch zusätzlich auf die Verpackungsöffnung. Nachdem die schlauchförmige Öffnungshilfe 4 bzw. Schlauch 8 gefüllt ist, kann ein Instrument über einen Schlauch mit dem Ventil 11 verbunden werden, so daß jederzeit eine Kontrolle des Druckes möglich ist.

Der aus der Verpackungsöffnung herausragende Anschlußgurt 15 wird mit der zu rettenden Person 16 oder dem zu rettenden Gerät verbunden. Das Fallschirmpaket wird bei Fluggeräten, wie Segelflugzeugen, Ultraleichtflugzeugen oder Hängegleitern, vorzüglich oberhalb der Tragflächen so angeordnet, daß es im Flug wenig Widerstand erzeugt oder sich selbst trägt. Ein Verheddern beim Öffnen mit dem Fluggerät 16 wird so vermieden.

Der Anschlußgurt 15 wird gerafft aufbewahrt und ist mit einer zusätzlichen, schnell öffnenden Vorrichtung versehen, die gesondert ausgelöst werden muß. Wird der Fallschirm in niedrigen Höhen ausgelöst, so bleibt der Anschlußgurt 15 gerafft und die zu rettende Person und/oder das Gerät 16 hängen direkt am Schirm. Beim Auslösen in größeren Höhen kann nach dem Auslösen des Fallschirmes etwas später der Anschlußgurt 15 durch einen Schnellauslöser gestreckt werden, wodurch vor allem das Fluggerät etwas tiefer unter dem Fallschirm hängt, was etwas günstiger ist.

Fig 8 zeigt eine schlauchförmige Öffnunghilfe 4 im ausgestreckten Zustand. Hier ist sie als Schlauch 8 ausgeführt. An den beiden freien Enden 9, 10, die, wie beschrieben mit einem Seil 18 (nicht gezeigt) verbunden werden können, sind jeweils ein Ventil 11 zum Befüllen des Schlauchs 8, bzw. zum Ablassen von Druck und ein Meßgerät, z. B. ein Manometer 24 zum Ablesen des Drucks angebracht.

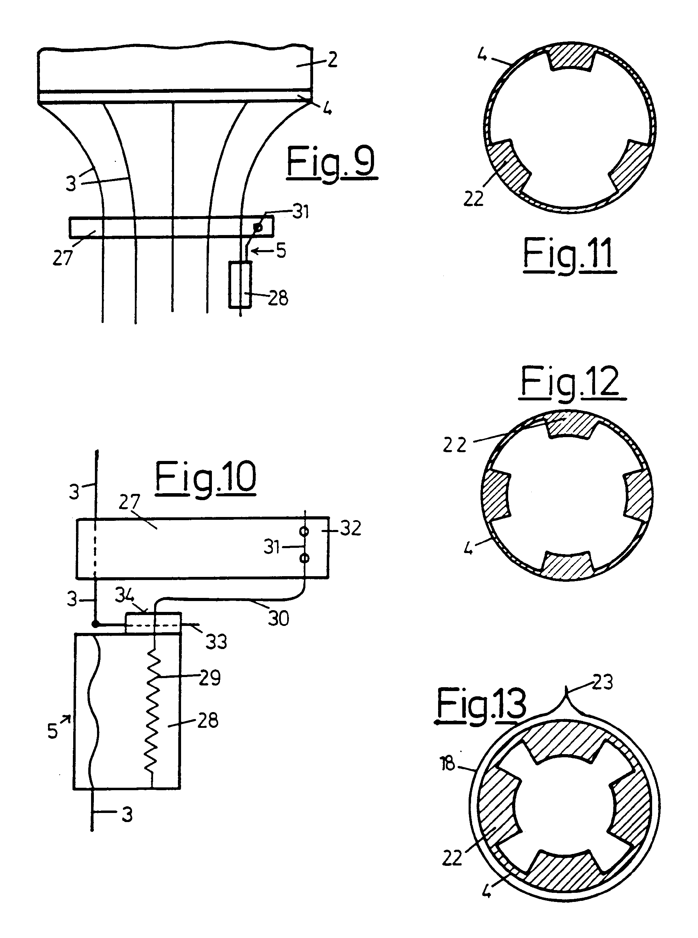

Fig. 9 und 10 zeigen eine Öffnungsverzögerung 5 für erfindungsgemäße Fallschirme.

Für sehr schnelle Flugzeuge kann man den Fallschirm zunächst nur teilweise zur Entfaltung bringen, indem man verhindert, daß die Fangleinen 3 in voller Länge auseinanderspringen können. Dadurch wird ein zu plötzliches und zu starkes Verzögern der Person, z. B. des Piloten, verhindert. Erst wenn die Bremskraft (g) kleiner als eine vorgegebene Federkraft wird, zieht sich die Feder zusammen und löst eine Öffnungsverzögerung 5 aus, die die volle Leinenlänge freigibt, wodurch sich auch die Schirmkappe 2 voll entfalten kann.

Beim Auslösen der Schirmkappe 2 springt der Packsack 6 auf, so daß der Schirm sofort frei liegt. Fast gleichzeitig springen, bedingt durch die Legeart der schlauchförmigen Öffnungshilfe 4, z. B. Schlauches 8, und die Tendenz des Schlauches sich beim Knicken federartig zu strecken, das Gewebe der Kappe 2 und der Schlauch 8 aus der Verpackung. Sobald der mäanderförmig gelegte Schlauch 8 insgesamt aus den Packsack 6 gesprungen ist, streckt er sich, durch den sehr hohen Druck der Luft im Schlauch schlagartig zu einem Ring bzw. ringförmigen Gebilde. Dadurch werden auch noch gleichzeitig die Fangleinen 3 zu einem großen Teil der Länge nach aus dem Packsack 6 gerissen und gestreckt. Bevor der Luftwiderstand auf die Kappe 2 richtig wirken kann, ist der Schirm bereits geöffnet und gefüllt.

Schon der kleinste Zug an dem Anschlußgurt 15 unterstützt zusätzlich das Strecken der Fangleinen 3.

Der volle Entfaltungsvorgang dauert je nach Druck in der schlauchförmigen Öffnungshilfe 4 bzw. Schlauch 8, Durchmesser des Schlauches und Größe des Fallschirmes weniger als 0,5 Sekunden.

Die Öffnungsbegrenzung 5 für das Zug um Zug Freigeben der Fangleinen 3 kann grundsätzlich verschiedenartig ausgeführt werden, wobei hier nur eine der möglichen Ausführungen wiedergegeben wird.

Bei dieser Ausführung nach Fig. 9 und 10 sind die Fangleinen 3, z. B. eines Kappenschirmes 2, mittels einer Manchette 27 ringförmig zusammengefaßt, und es ist diese Manchette an einer der Fangleinen fest angebracht. Unterhalb dieser Manchette 27 ist ein Abstandhalter 28, z. B. in Form eines Stabes oder eines Rohres an der gleichen Fangleine 3 befestigt, und es ist parallel zu diesem Stab oder Rohr ein Federmittel 29 vorgesehen. Das Federmittel 29, welches als Spiralfeder oder Gummiband ausgeführt sein kann, ist mit seinem einen Ende am Abstandhalter 28 mit befestigt und mit seinem anderen Ende über eine Schlaufe 30 mit einem Stift 31 verbunden, der durch Löcher 32 an den freien Enden der Manchette 27 geführt ist. An der gleichen Fangleine 3 ist ein Arretierungsstift 33 vorgesehen, der vor Freigabe der Fangleinen 3 durch die Manchette 27 das Zusammenziehen des Federmittels 29 gewährleistet. Wird und der Arretierungsstift 33 durch Strecken der Fangleine 3 aus dessen Arretierung 34 gezogen, so wird gleichzeitig auch das Federmittel 29 entriegelt, welches sich sofort zusammenzieht und dabei den Stift 31 aus den Löchern 32 der Manchette 27 herauszieht. Mit dem Herausziehen dieses Stiftes 31 aus den Löchern 32 der Manchette 27 werden die Fangleinen 3 radial freigegeben, so daß sich der Kappenfallschirm bzw. dessen Kappe 2 entfalten kann. Die Freigabe der Fangleinen 3 erfolgt demnach zu einem Zeitpunkt, zu dem die Fallgeschwindigkeit sich etwas verzögert hat, so daß auf die Person oder Last 16 eine geringere g-Belastung einwirkt, als dies bei sofortigem Öffnen der Kappe 2 der Fall wäre. Das Federmittel 29, welches vorzugsweise als Gummiband ausgeführt werden würde, kann bei Anwendung eines Rohres als Abstandhalter 28 vorzugsweise im Rohr vorgesehen sein.

Andere Varianten einer solchen Öffnungsbegrenzung könnte ein an einer Fangleine 3 befestigtes Gewicht, welches in Schließlage des Stiftes 31 von einem ähnlichen Federmittel 29 in Gleichgewicht gehalten und bei zunehmender g-Belastung durch analogen Gewichtsanstieg den Stift freigeben würde, sein. Ein solches Gewicht könnte bei 1 g-Belastung z. B. 80 kg haben und bei 4 g-Belastung das Gewicht von 320 kg erreichen u.s.w. Solche Solche vorbeschriebene Öffnungsbegrenzungen können mehrfach an den Fangleinen 3 vorgesehen sein, so daß die Fangleinen entsprechend der Fallgeschwindigkeit nach und nach freigegeben werden.

Analog dieser Öffnungsbegrenzung könnte auch ein Ring um alle Fangleinen 3 gelegt werden, der an einer Mittelleine angehängt wäre und vom Fallschirmspringer selbst auf und ab bewegt werden könnte. Entsprechend der Höhenlage dieses Ringes würden die Fangleinen 3 mehr oder weniger weit radial freigegeben werden, so daß die Fallgeschwindigkeit variiert werden könnte. Diese Möglichkeit setzt eine gewisse Übung des Springers voraus.

Ebenso könnte zur Begrenzung der g-Belastung bei einem Kappenfallschirm 2, daß mit einer sogenannten Mittelleine ausgestattet ist, diese Mittelleine selbst zur g-Belastung herangezogen werden. In einem solchen Fall wird die Mittelleine beispielsweise durch einen Panikhaken, ähnlich der Manchette 27 gerafft gekürzt, und es ist eine Öffnungsverzögerung zum Auslösen des Panikhakens bei genügend niedriger g-Belastung vorgesehen. Durch diese Möglichkeit kann die im freien Fall stark reingezogene Mitte der Schirmkappe 2 erst dann zur Bildung der vollen Kappe freigegeben werden, wenn die Öffnungsverzögerung 5 durch Auslösen des Panikhakens 27 angesprochen hat.

Selbstverständlich kann diese Art der Begrenzung der g-Belastung durch Hintereinanderschalten mehrerer Öffnungsverzögerungen 5 in Stufen erfolgen, oder es kann die Begrenzung durch eine Bremse stufenlos die Mittelleine freigeben.

Eine solche Bremse kann von einem Gewicht, das je nach g-Belastung mehr oder weniger stark nach unten zieht und einem daran angelenkten Preßarm, der auf eine als Gurt ausgeführte Mittelleine kranschlüssig wirkt, ausgeführt sein. Die Anwendung eines Gurtes als Mittelleine hat den Vorteil, daß diese sich leichter von den übrigen Fangleinen 3 unterscheidet. Auch hat der Gurt den Vorteil, daß er leichter bei Erreichen des Bodens und bei starkem Bodenwind herangezogen werden kann, was ein schnelles Zusammenfallen des Schirmes 2 begünstigt und ein Schleifen der Peron über den Boden verhindert.

Die Fig. 11 bis 13 zeigen Querschnitte durch, hier als Schlauch 8 ausgeführte schlauchförmige Öffnungshilfen 4. Die Schläuche 8 weisen nach innen gerichtete Profilrippen 22 auf, die verhindern, daß im Schlauch 8 in geknicktem, verpackten Zustand, Luftstaus bei der Belüftung mit Druckluft auftreten können.

Fig 13 zeigt zusätzlich, wie eine als Schlauch 8 ausgeführte schlauchförmige Öffnungshilfe 4 mit einem Armierungsgewebe 18 umgeben ist, daß nach einer Seite hin als Fahne 23 zusammengeführt ist. Die schlauchförmige Öffnungshilfe 4 wird über die Fahne 23 mit der Basis 7 der Kappe 2, z. B. durch Vernähen, Verkleben oder Verschweissen, verbunden.

### BEZUGSZEICHENLISTE

- 1: Fallschirm
- 2: Kappe
- 3: Fangleinen
- 4: schlauchförmige Öffnungshilfe
- 5: Öffnungsverzögerung
- 6: Packsack
- 7: Basis
- 8: Schlauch
- 9: freies Ende
- 10: freies Ende
- 11: Ventile
- 12: Bodenfläche, Platte
- 13: Kante
- 14: Winkel
- 15: Gurt
- 16: Person oder Last
- 17: Schlaufen
- 18: Armierungsgewebe
- 19: Luftfenster
- 20: Teilstücke
- 21: Verbindungen
- 22: Profilrippen
- 23: Fahne
- 24: Manometer
- 25: Saum
- 26:
- 27: Manchette
- 28: Abstandhalter
- 29: Federmittel
- 30: Schlaufe
- 31: Stift
- 32: Löcher
- 33: Raststift

## Patentansprüche

1. Fall- oder Gleitschirm (1),
mit einer Kappe (2) und an dieser befestigten Fangleinen (3) zum Halten einer Person oder einer Last (16),
sowie mit einer schlauchförmigen, am unteren Saum (25) der Kappe (2) angebrachten und wenigstens teilweise entlang der Basis (7) geführten Öffnungshilfe (4), wobei die schlauchförmige Öffnungshilfe (4) vor dem Öffnungsvorgang mit unter Druck stehender Luft oder Gas gefüllt ist,
wobei die schlauchförmige Öffnungshilfe (4) aus einem luftdichten Elastomer besteht,
wobei die schlauchförmige Öffnungshilfe (4) von einem reißfesten Armierungsgewebe (18) rumhüllt ist,
**dadurch gekennzeichnet**,
daß die schlauchförmige Öffnungshilfe (4) mindestens zwei in ihr Inneres gerichtete Profilrippen (22) ausweist,
daß das Elastomer, woraus die schlauchförmige Öffnungshilfe (4) besteht, auch reißfest, temperaturbeständig und formstabil Elastomer ist,
daß das Armierungsgewebe (18) aus Kunstfasern besteht,
daß das Armierungsgewebe (18) die schlauchförmige Öffnungshilfe (4) umhüllt und diese mit einer Fahne überlappt,
und daß die Fahne in den Saum (25) der Kappe (2) eingenäht ist.

2. Fall-, oder Gleitschirm nach Anspruch 1,
**dadurch gekennzeichnet**,
daß die schlauchförmige Öffnungshilfe (4) aus mehreren Teilstüken (20) besteht, die in einem Abstand voneinander an der Basis (7) angebracht sind.

3. Fall-, oder Gleitschirm nach Anspruch 2,
**dadurch gekennzeichnet**,
daß die Teilstücke (20) untereinander über Schnüre (21), Stege oder dergleichen verbunden sind.

4. Fall-, oder Gleitschirm nach einem der vorgehenden Ansprüche,
**dadurch gekennzeichnet**,
daß die Kappe (2) stirnseitig mit einem oder mehreren Luftfenstern (19) versehen ist.

5. Fall-, oder Gleitschirm nach Anspruch 4,
**dadurch gekennzeichnet**,
daß die Luftfenster (19) L-förmig, mit nach außen gerichteten Querbalken geformt sind.

6. Fall-, oder Gleitschirm nach Anspruch 4 oder 5,
**dadurch gekennzeichnet**,
daß die Luftfenster (19) mit einem Netz unterlegt sind.

7. Fall-, oder Gleitschirm nach einem der vorstehenden Ansprüch,
**dadurch gekennzeichnet**,
daß als Mittel zur Verbesserung der Flug-, oder Gleiteigenschaften eine zentrale, mit der Spitze der Kappe verbundene Halteleine vorgesehen ist.

8. Fall-, oder Gleitschirm nach Anspruch 7,
**dadurch gekennzeichnet**,
daß mindestens zwei der rückwärtigen Fangleinen länger sind, als die übrigen Fangleinen (3).

9. Fall-, oder Gleitschirm nach einem der vorstehenden Ansprüche,
**dadurch gekennzeichnet**,
daß die schlauchförmige Öffnungshilfe (4) mit einem oder mehreren Ventilen (11) zum Einfüllen der Luft oder des Gases versehen ist.

10. Fall-, oder Gleitschirm nach einem der vorstehenden Ansprüche,
**dadurch gekennzeichnet**,
daß die schlauchförmige Öffnungshilfe (4) mit einem oder mehreren Anzeigemitteln (24) zur Anzeige des Luft- oder Gasdrucks versehen ist.

11. Fall-, oder Gleitschirm nach einem der vorstehenden Ansprüche,
**dadurch gekennzeichnet**,
daß zwischen Kappe (2) und Person (16), bzw. Last mindestens eine Öffnungsverzögerung (5) für die Fangleinen vorgesehen ist und daß die Öffnungsverzögerung (5) die radiale Ausarbeitung der Fangleinen (3) erst bei Erreichen einer eingestellten Belastung ermöglicht.

12. Fall-, oder Gleitschirm nach Anspruch 11,
**dadurch gekennzeichnet**,
daß die Öffnungsverzögerung (5) von einem an einer Fangleine (3) angebrachten Abstandhalter (28) nebst einen zu diesem parallel verlaufenden Federmittel (29) insbesondere ein Gummiband, oder eine Spiralfeder, wie auch einem die Federspannung aufhebenden Raststift (35) gebildet wird, und daß dieser Raststift (33) an der gleichen Fangleine (3) wie der Abstandhalter (28) befestigt und von der Streckung dieser Fangleine aus dessen Arretierung ausgerastet wird.

13. Fall-, oder Gleitschirm nach Anspruch 12,
**dadurch gekennzeichnet**,
daß der Abstandhalter (28) ein Rohr ist, und daß durch dieses Rohr die Fangleine (3) gezogen und mindestens am einen Ende des Rohres befestigt ist, und daß das Federmittel (29) ebenfalls durch dieses Rohr geführt, und mit seinem einen Ende am Rohr und mit seinem anderen Ende am Raststift (33) befestigt ist.

14. Fall-, oder Gleitschirm nach einem der Ansprüche 9 bis 13,
**dadurch gekennzeichnet**,
daß er im funktionsfähigen Zustand in einen, im Bedarfsfall leicht zu öffnenden Packsack (6) eingelegt ist.

15. Fall-, oder Gleitschirm nach Anspruch 14,
**dadurch gekennzeichnet**,
daß die schlauchförmige Öffnungehilfe (4) mäanderförmig in den Packsack (6) eingelegt ist.

16. Fall-, oder Gleitschirm nach Anspruch 14 oder 15,
**dadurch gekennzeichnet**,
daß die Befüllung der schlauchförmigen Öffnungshilfe (4) mit Luft oder Gas im in den Packsack (6) eingelegten Zustand erfolgt.

17. Fall-, oder Gleitschirm nach Anspruch 14,
**dadurch gekennzeichnet**,
daß die Ventile (11) und Anzeigemittel (24) der schlauchförmigen Öffnungshilfe (4) in den Packsack (6) eingelegten Zustand von außen bedienbar, bzw. ablesbar sind.

18. Fall-, oder Gleitschirm nach einem der Ansprüche 9 - 17,
**dadurch gekennzeichnet**,
daß mindestens die Kappe (2), die schlauchförmige Öffnungshilfe (4) und die Leinen (3) des Fallschirmes in einen Packsack (6) einlegbar sind und zwar derart, daß die schlauchförmige Öffnungshilfe mäanderförmig gefaltet wird und diese die Bodenfläche (12) des Packsacks ausfüllt und dabei die Streckungskräfte aller Knickungen der schlauchförmigen Öffnungshilfe in Richtung zur Öffnung der Verpackung wirken.

19. Fall-, oder Gleitschirm nach Anspruch 14,
**dadurch gekennzeichnet**,
daß der Packsack (6) mit einer Platte (12) aus federndem Material ausgerüstet ist, und diese Verpackung so geschlossen ist, daß die in geschlossenem Zustand eine Rolle bildet, die so von mindestens einem Verschluß zugehalten wird, und daß dieser Verschluß insbesondere von einem Gurt (15) mit einem Schloß in der Mitte des Packsacks gebildet wird.

20. Fall-, oder Gleitschirm nach dem Anspruch 15,
**dadurch gekennzeichnet**,
daß der Fall-, oder Gleitschirm in den Packsack (6) gestopft wird.

## Claims

1. A parachute or paraglider (1) comprising a canopy (2) and shroud lines (3) attached thereto for holding a person or load (16), and comprising a hose-form opening aid (4) attached to the lower hem (25) of the canopy (2) and guided at least partially along the base (7), the hose-form opening aid (4) being filled with compressed air or gas before the opening process, consisting of an air-tight elastomer, and being enveloped by a tear-resistant reinforcing fabric (18), characterized in that the hose-form opening aid (4) comprises at least two shaped ribs (22) directed inwards, in that the elastomer, of which the hose-form opening aid (4) consists, is also tear-resistant, temperature-stable and dimensionally stable, in that the reinforcing fabric (18) consists of synthetic fibres, in that the reinforcing fabric (18) envelops the hose-form opening aid (4) and overlaps it with a flag, and in that the flag is sewn into the hem (25) of the canopy (2).

2. A parachute or paraglider according to claim 1,
characterized in that the hose-form opening aid (4) consists of partial members (20) which are attached to the base (7) at a distance from each other.

3. A parachute or paraglider according to claim 2,
characterized in that the partial members (20) are connected together by cords (21), webs or the like.

4. A parachute or paraglider according to any one of the preceding claims, characterized in that the canopy (2) is provided at the front with one or more air windows (19).

5. A parachute or paraglider according to claim 4,
characterized in that the air windows (19) are L-shaped, with outwardly directed transverse members.

6. A parachute or paraglider according to claim 4 or claim 5, characterized in that the air windows (19) have net positioned under them.

7. A parachute or paraglider according to any one of the preceding claims, characterized in that a central supporting line connected with the apex of the canopy is provided as a means of improving the flying or gliding properties.

8. A parachute or paraglider according to claim 7,
characterized in that at least two of the rear shroud lines are longer than the other shroud lines (3).

9. A parachute or paraglider according to any one of the preceding claims, characterized in that the hose-form opening aid (4) is provided with one or more valves (11) for letting in the air or gas.

10. A parachute or paraglider according to any one of the preceding claims, characterized in that the hose-form opening aid (4) is provided with one or more display means (24) for indicating the air or gas pressure.

11. A parachute or paraglider according to any one of the preceding claims, characterized in that at least one opening retarder (5) is provided for the shroud lines between canopy (2) and person (16) or load and in that the opening retarder (5) permits radial preparation of the shroud lines (3) only when a set loading is reached.

12. A parachute or paraglider according to claim 11,
characterized in that the opening retarder (5) is formed of a spacer (28) attached to a shroud line (3) together with a spring means (29), especially a rubber band or a flat spiral spring, running parallel with said spacer (28), as well as a locking pin (33) cancelling the spring tension, and in that this locking pin (33) is fastened to the same shroud line (3) as the spacer (28) and is unlocked from its catch by the extension of this shroud line.

13. A parachute or paraglider according to claim 12,
characterized in that the spacer (28) is a tube, and in that the shroud line (3) is drawn through this tube and is fastened to at least one end of the tube, and in that the spring means (29) is likewise guided through this tube and fastened with its one end to the tube and with its other end to the locking pin (33).

14. A parachute or paraglider according to any one of claims 9 to 13, characterized in that it is inserted, in the operative state, into a pack (6) which is easily opened if necessary.

15. A parachute or paraglider according to claim 14,
characterized in that the hose-form opening aid (4) is inserted meanderingly into the pack (6).

16. A parachute or paraglider according to claim 14 or claim 15, characterized in that filling of the hose-form opening aid (4) with air or gas is effected while it is inserted in the pack (6).

17. A parachute or paraglider according to claim 14,
characterized in that the valves (11) and display means (24) of the hose-form opening aid (4) can be operated or read respectively from outside while in the pack (6).

18. A parachute or paraglider according to any one of claims 9 to 17, characterized in that at least the canopy (2), the hose-form opening aid (4) and the lines (3) of the parachute can be inserted into a pack (6), in such a way that the hose-form opening aid is folded meanderingly and fills the floor area (12) of the pack, the extension forces of all the bends of the hose-form opening aid acting in the direction to open the packaging.

19. A parachute or paraglider according to claim 14,
characterized in that the pack (6) is provided with a sheet (12) of spring-loaded material and in that this packaging is so closed that in the closed state it forms a roll which is kept thus by at least one closure, and in that this closure is formed especially of a belt (15) with a lock in the middle of the pack.

20. A parachute or paraglider according to claim 15,
characterized in that the parachute or paraglider is packed into the pack (6).

## Revendications

1. Parachute de descente ou ascensionnel, comportant une voilure (2) et des suspentes (3) rattachées à celle-ci, pour retenir une personne ou une charge (16), ainsi qu'un dispositif d'assistance à l'ouverture (4) en forme de boyau assemblé à l'ourlet inférieur (25) de la voilure et guidé au moins en partie le long du bord d'attaque (7), le dispositif d'assistance à l'ouverture en forme de boyau (4) étant rempli d'air ou de gaz comprimé avant l'ouverture, ce dispositif d'assistance à l'ouverture en forme de boyau (4) étant fabriqué dans un élastomère étanche à l'air, et le dispositif d'assistance à l'ouverture (4) en forme de boyau étant enveloppé d'un tissu d'armature (18) résistant à l'arrachement, parachute caractérisé en ce que le dispositif d'assistance à l'ouverture en forme de boyau (4) présente au moins deux cannelures profilées (22) dirigées vers son intérieur, en ce que l'élastomère dont est fait le dispositif d'assistance à l'ouverture en forme de boyau (4) est également résistant à l'arrachement, résistant à la chaleur et indéformable, en ce que le tissu d'armature (18) se compose de fibres synthétiques, en ce que le tissu d'armature (18) enveloppe le dispositif d'assistance à l'ouverture en forme de boyau (4) et le recouvre avec un talon ou fanion, et en ce que le fanion est cousu dans l'ourlet (25) de la voilure (2).

2. Parachute de descente ou ascensionnel suivant la revendication 1, caractérisé en ce que le dispositif d'assistance à l'ouverture en forme de boyau (4) se compose d'une pluralité de tronçons (20) disposés à une certaine distance les uns des autres sur le bord d'attaque (7).

3. Parachute de descente ou ascensionnel suivant la revendication 2, caractérisé en ce que les tronçons (20) sont reliés entre eux par des cordons (21), des entretoises ou éléments similaires.

4. Parachute de descente ou ascensionnel suivant l'une quelconque des revendications précédentes, caractérisé en ce que la voilure (2) est dotée d'une ou de plusieurs fenêtres d'échappement d'air (19) sur sa face frontale.

5. Parachute de descente ou ascensionnel suivant la revendication 4, caractérisé en ce que les fenêtres d'échappement d'air (19) sont découpées en forme de L, dont le pied est dirigé vers l'extérieur.

6. Parachute de descente ou ascensionnel suivant la revendication 4 ou 5, caractérisé en ce qu'un filet est placé sous les fenêtres d'échappement d'air (19).

7. Parachute de descente ou ascensionnel suivant l'une quelconque des revendications précédentes, caractérisé en ce qu'une suspente de retenue centrale, reliée au sommet de la voilure, est prévue comme moyen pour améliorer les caractéristiques de vol ou de glissement.

8. Parachute de descente ou ascensionnel suivant la revendication 7, caractérisé en ce qu'au moins deux des suspentes dorsales sont plus longues que les autres suspentes (3).

9. Parachute de descente ou ascensionnel suivant l'une quelconque des revendications précédentes, caractérisé en ce que le dispositif d'assistance à l'ouverture en forme de boyau (4) est équipé d'une ou de plusieurs soupapes (11) pour l'alimentation de l'air ou du gaz.

10. Parachute de descente ou ascensionnel suivant l'une quelconque des revendications précédentes, caractérisé en ce que le dispositif d'assistance à l'ouverture en forme de boyau (4) est pourvu d'un ou de plusieurs indicateurs (24) pour l'affichage de la pression de l'air ou du gaz.

11. Parachute de descente ou ascensionnel suivant l'une quelconque des revendications précédentes, caractérisé en ce qu'au moins un retardateur d'ouverture (5) pour les suspentes est prévu entre la voilure (2) et la personne (16) ou charge, et en ce que le retardateur d'ouverture (5) ne permet le déploiement radial des suspentes (3) qu'à l'atteinte d'une charge normalisée.

12. Parachute de descente ou ascensionnel suivant la revendication 11, caractérisé en ce que le retardateur d'ouverture (5) est constitué par un écarteur (28) assemblé à une suspente (3), par un moyen à effet de ressort (29) parallèle à celui-ci, en particulier une bande de caoutchouc ou un ressort spiral, et par une goupille d'arrêt (33) qui compense la bande du ressort, et en ce que cette goupille d'arrêt (33) est fixée à la même suspente (3) que l'écarteur (28) et est délogée de son arrêt par l'étirement de cette suspente.

13. Parachute de descente ou ascensionnel suivant la revendication 12, caractérisé en ce que l'écarteur (28) est un tube et en ce que la suspente (3) est tirée à travers ce tube et fixée à au moins l'une des extrémités de ce tube, et en ce que le moyen à effet de ressort (29) est également guidé à travers ce tube et fixé par l'une de ses extrémités à ce tube, et par l'autre à la goupille d'arrêt (33).

14. Parachute de descente ou ascensionnel suivant l'une quelconque des revendications 9 à 13, caractérisé en ce qu'il est logé à l'état prêt à fonctionner dans un sac de paquetage (6) facile à ouvrir en cas de nécessité.

15. Parachute de descente ou ascensionnel suivant la revendication 14, caractérisé en ce que le dispositif d'assistance à l'ouverture en forme de boyau (4) est logé dans le sac de paquetage (6) en formant des méandres.

16. Parachute de descente ou ascensionnel suivant la revendication 14 ou 15, caractérisé en ce que le remplissage du dispositif d'assistance à l'ouverture en forme de boyau (4) avec de l'air ou du gaz se fait à l'état replié dans le sac de paquetage (6).

17. Parachute de descente ou ascensionnel suivant la revendication 14, caractérisé en ce que les soupapes (11) et les indicateurs (24) du dispositif d'assistance à l'ouverture en forme de boyau (4) replié dans le sac de paquetage (6) sont manoeuvrables et lisibles de l'extérieur.

18. Parachute de descente ou ascensionnel suivant l'une quelconque des revendications 9 à 17, caractérisé en ce qu'au moins la voilure (2), le dispositif d'assistance à l'ouverture en forme de boyau (4) et les suspentes (3) du parachute peuvent être logés dans un sac de paquetage (6), et de telle sorte que le dispositif d'assistance à l'ouverture en forme de boyau soit plié en décrivant des méandres et remplisse le fond (12) du sac de paquetage et que les forces d'étirement de tous les plis du dispositif d'assistance à l'ouverture en forme de boyau agissent dans le sens de l'ouverture du paquetage.

19. Parachute de descente ou ascensionnel suivant la revendication 14, caractérisé en ce que le sac de paquetage (6) est équipé d'une plaque (12) en matière élastique et que ce paquetage est fermé de telle manière qu'il forme à l'état fermé un rouleau qui est maintenu fermé par au moins une fermeture, et en ce que cette fermeture est matérialisée en particulier par une sangle (15) avec un dispositif de blocage au milieu du sac de paquetage.

20. Parachute de descente ou ascensionnel suivant la revendication 15, caractérisé en ce que le parachute de descente ou ascensionnel est bourré dans le sac de paquetage (6).
